# EUROPEAN PATENT APPLICATION

(11) **EP 1 296 482 A2**
(43) Date of publication of application: **26.03.2003**
(21) Application number: 02256553.5
(22) Date of filing: 20.09.2002
(51) Int. Cl.: H04L 12/24

(54) **A system and method for managing one or more domains**

(30) Priority: 25.09.2001 US 962870
(71) Applicant: Sun Microsystems, Inc., Santa Clara, California 95054 (US)
(72) Inventor: Gilbert, Gary L., San Diego, CA 92117 (US); Williams, Ricki D., Temecula, CA 92592 (US); Quick, Cathleen A., San Diego, CA 92126 (US); Schwartz, William, San Diego, CA 92129 (US)
(74) Representative: Davies, Simon Robert

(57) **Abstract**

An apparatus is provided that comprises a storage unit and a first control unit communicatively coupled to the storage unit. The first control unit is capable of managing the one or more domains in the processor-based system over a network. Each domain may have a path for transmitting data and a network path for transmitting control signals. The control unit manages a domain over the network path.

## Description

### Field of the Invention

This invention relates generally to managing one or more domains within a processor-based system.

### Description of the Related Art

The last several years have witnessed an increased demand for network computing, partly due to the emergence of the Internet. Some of the notable trends in the industry include a boom in the growth of Applications Service Providers (ASPs) that provide applications to businesses over networks and enterprises that use the Internet to distribute product data to customers, to take orders, and to enhance communications with employees.

Businesses typically rely on network computing to maintain a competitive advantage over other businesses. As such, developers, when designing processor-based systems for use in network-centric environments, may take several factors into consideration to meet the expectation of the customers, factors such as functionality, reliability, scalability, and the performance of such systems.

One example of a processor-based system used in a network-centric environment is a mid-range server system. A single mid-range server system may, for example, be configured for a plurality of domains, where a domain may act as a separate machine by running its own instance of an operating system to perform one or more of the configured tasks.

The benefit of providing substantially independently operating domains within an integrated system is that as customers are able to perform a variety of tasks that would otherwise be reserved for several different machines. However, managing a plurality of domains within a system sometimes proves to be a challenging task, as designers of such systems have a finite number of resources to build a functioning system. For example, managing one or more domains in a system may consume valuable hardware resources that could otherwise be used to deliver additional features to the customers.

### Summary of the Invention

Accordingly, one embodiment of the invention provides an apparatus for managing one or more domains in a processor-based system. The apparatus comprises a storage unit and a first control unit communicatively coupled to the storage unit. The first control unit is capable of managing the one or more domains in the processor-based system over a network.

In accordance with another embodiment of the present invention, a method is provided for managing one or more domains in a processor-based system. The method comprises configuring at least a first board in the processor-based system as a first domain and a second board in the processor-based system as a second domain, wherein each of the first and second domains has a separate connection for data and control signals. The method further comprises transmitting one or more control signals over the control signal connection to at least one of the first domain and second domain.

In accordance with another embodiment of the invention, an article is provided comprising one or more machine-readable storage media containing instructions for managing one or more domains in a processor-based system. The instructions, when executed, cause a processor to configure a first domain in the processor-based system, to configure a second domain in the processor-based system, and to manage the first domain and the second domain in the processor-based system over a network.

Such an approach can help to provide a more efficient way of managing domains in a system.

### Brief Description of the Drawings

Various preferred embodiments of the invention will now be described in detail, by way of example only, with reference to the following drawings, in which like reference numerals identify like elements:
Figure 1 shows a schematic block diagram of a system in accordance with one embodiment of the present invention;
Figure 2 illustrates a block diagram of a domain configuration that may be employed in the system of Figure 1, in accordance with one embodiment of the present invention;
Figure 3 depicts a block diagram of an arrangement that may be employed in the system of Figure 1 for managing one or more of the domains shown in Figure 2, in accordance with one embodiment of the present invention;
Figures 4a-b illustrate a flow diagram of a method that may be implemented in the system of Figure 1, in accordance with one embodiment of the present invention; and
Figure 5 illustrates a schematic block diagram of a system in accordance with an alternative embodiment of the present invention.

### Detailed Description

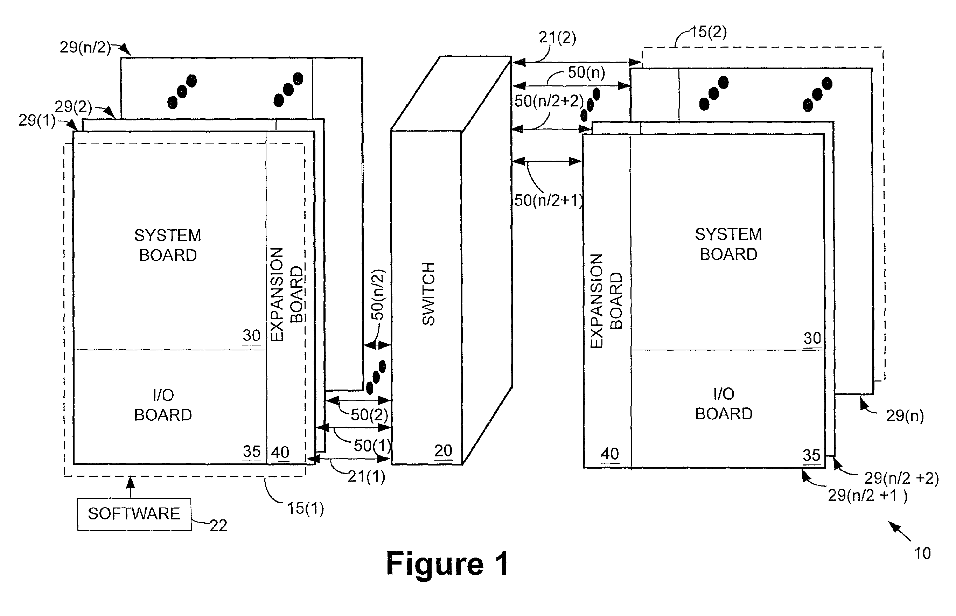

Referring now to Figure 1, a block diagram of a system 10 in accordance with one embodiment of the present invention is illustrated. The system 10, in one embodiment, includes a plurality of system control boards 15(1-2) that are coupled to a switch 20. For illustrative purposes, lines 21(1-2) are utilized to show that the system control boards 15(1-2) are coupled to the switch 20, although it should be appreciated that, in other embodiments, the boards 15(1-2) may be coupled to the switch in any of a variety of ways, including by edge connectors, cables, or other available interfaces.

In the illustrated embodiment, the system 10 includes two control boards 15(1-2), one for managing the overall operation of the system 10 and the other to provide redundancy and automatic failover in the event that the other board fails. The first system control board 15(1) serves as a "main" system control board, while the second system control board 15(2) serves as an alternate hot-swap replaceable system control board. It will be appreciated that other configurations are also possible.

The main system control board 15(1) is generally responsible for providing system controller resources for the system 10. If a failure of the hardware or software occurs on the main system control board 15(1), or a failure occurs on any hardware control path from the main system control board 15(1) to other system devices, the system controller failover software 22 automatically triggers a failover to the alternative control board 15(2). The alternative system control board 15(2), in one embodiment, then assumes the role of the main system control board 15(1) and takes over the main system controller responsibilities. To accomplish the transition from the main system control board 15(1) to the alternative system control board 15(2), it may be desirable to replicate the system controller data, configuration, and/or log files on both of the system control boards 15(1-2).

In one embodiment, at any given moment, generally one of the two system control boards 15(1-2) actively controls the overall operations of the system 10. Accordingly, the term "active system control board", as utilized hereinafter, may refer to either one of the system control boards 15(1-2), depending on the board that is managing the operations of the system 10 at that moment.

The system 10, in one embodiment, includes a plurality of system board sets 29(1-n) that are coupled to the switch 20, as indicated by lines 50(1-n). The system board sets 29(1-n) may be coupled to the switch 20 in one of several ways, including edge connectors or other available interfaces. The switch 20 serves as a communications conduit for the plurality of system board sets 29(1-n), half of which may be connected on one side of the switch 20, and the other half on the opposite side of the switch 20.

The switch 20, in one embodiment, may be an 18x18 crossbar switch that allows system board sets 29(1-n) and system control boards 15(1-2) to communicate. Thus the switch 20 allows the two system control boards 15(1-2) to communicate with each other or with other system board sets 29(1-n), as well as allowing the system board sets 29(1-n) to communicate with each other. As described in more detail below, in accordance with one embodiment of the present invention, the system control boards 15(1-2) use a standard communications protocol connection through the switch 20 to communicate with one or more of the system board sets 29(1-n).

The system board sets 29(1-n), in one embodiment, comprise one or more boards, including a system board 30, an I/O board 35, and an expansion board 40. The system board 30 may include processors (plus memories) for executing applications and portions of an operating system. The I/O board 35 may manage I/O cards, such as peripheral component interface cards and optical cards, that are installed in the system 10. The expander board 40, in one embodiment, generally acts as a multiplexer (*e.g*., 2:1 multiplexer) to allow both the system and I/O boards 30, 35 to interface with the switch 20, which, in some instances, may have only one slot for interfacing with both boards 30, 35.

In one embodiment, the system 10 may be dynamically subdivided into a plurality of system domains, where each domain has a separate boot disk (for example, to execute a specific instance of the operating system), plus separate disk storage, network interfaces, and/or I/O interfaces. Each domain may operate as a separate machine that performs a variety of user-configured services. For example, one or more domains may be designated as an application server, a web server, a database server, and the like. In one embodiment, each domain may run its own operating system (e.g., the Solaris operating system, from Sun Microsystems Inc.) and may be reconfigured without interrupting the operation of other domains.

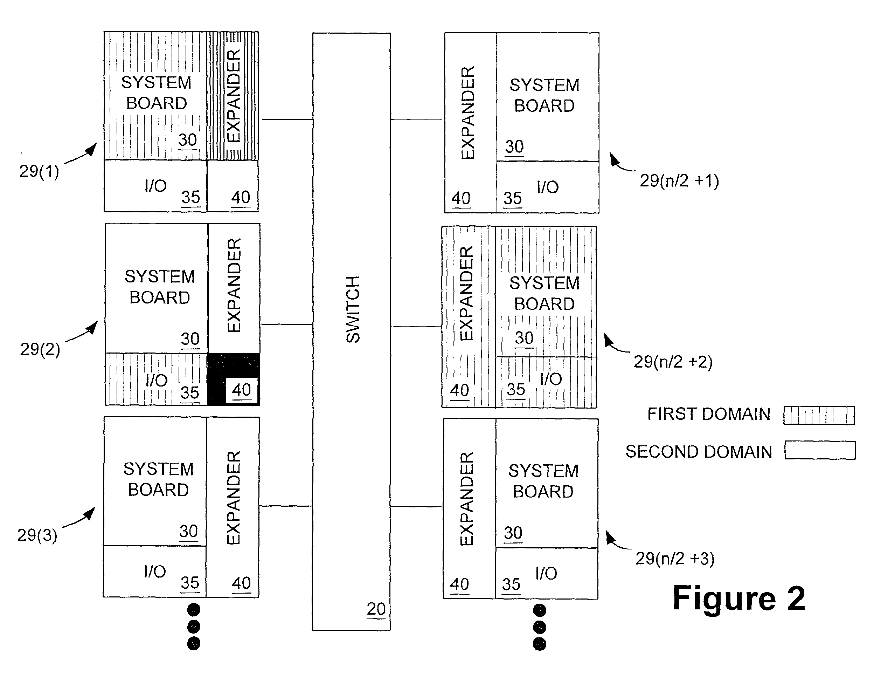

Figure 2 illustrates an exemplary arrangement where at least two domains are defined in the system 10. The first domain, identified by vertical cross-sectional lines, includes the system board set 29(n/2+2), the system board 30 of the system board set 29(1), and the I/O board 35 of the system board set 29(2). The second domain in the illustrated embodiment includes the system board sets 29(3), 29(n/2+1), and 29(n/2+3), as well as the I/O board 35 of the system board set 29(1) and the system board 30 of the system board set 29(2).

As shown, a domain may be formed of an entire system board set 29(1-n), one or more boards (*e.g.,* system board 30, I/O board 35) from selected system board sets 29(1-n), or a combination thereof. Although not necessary, it may be possible to define each system board set 29(1-n) as a separate domain. For example, if each system board set 29(1-n) were its own domain, the system 10 may conceivably have up to "n" (*i.e*., the number of system board sets) different domains. When two boards (*e.g.,* system board 30 and I/O board 35) from the same system board set 29(1-n) are in different domains, such a configuration is referred to as a "split expander". The expander board 40 of the system board sets 29(1-n), in one embodiment, keeps the transactions separate for each domain. No physical proximity may be needed for boards in a domain.

A domain is generally isolated from other domains. In one embodiment, communications between two or more domains are not directly available, except through an agent or some external arbitrator device. Thus, in one embodiment, the communications within a domain are generally secure from other domains in the system 10.

Using the switch 20, inter-domain communications may be possible. For example, the switch 20 may provide a high-speed communications path so that data may be exchanged between the first domain and the second domain of Figure 2. In one embodiment, a separate path for data and address through the switch 20 may be used for inter-domain communications.

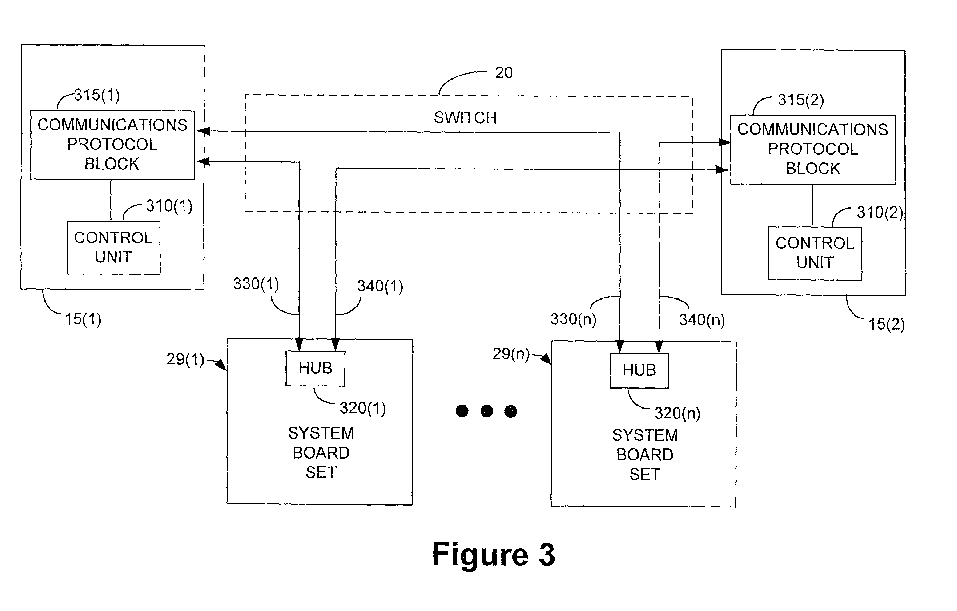

Referring now to Figure 3, an example arrangement for managing one or more of the domains defined in the system 10 is illustrated. In the illustrated embodiment, each of the system control boards 15(1-2) includes a respective control unit 310(1-2) and a communications protocol block 315(1-2). As explained earlier, the second control board 15(2) may serve as a back-up for the first control board 15(1) by assuming control should the first control board 15(1) fail. The arrangement of Figure 3, as described below, allows the second control board 15(2) to communicate with one or more domains (comprising the entire system board set 29(1-n) or selected portions thereof) in case of a malfunction in the first control board 15(1).

The control units 310(1-2), in one embodiment, may be microprocessors that are coupled to the respective communications protocol blocks 315(1-2). The communications protocol blocks 315(1-2) may represent a protocol layer for any one of a variety of industry-accepted standards, such as the I.E.E.E. 802.3 Ethernet standard, the I.E.E.E. 802.5 Token Ring standard, the Transmission Control Protocol standard, the asynchronous transfer mode (ATM) standard, and the like. In an alternative embodiment, the communications protocol blocks 315(1-2) may represent a protocol layer for a private communications protocol, or for any other available communications protocol. In one embodiment, the communications protocol blocks 315(1-2) include the device driver layer for the communications protocol that is employed.

In one embodiment, each system board set 29(1-n) includes a hub 320(1-n) that is coupled to the communications protocol blocks 315(1-2) of the control boards 15(1-2) to allow communications with either one of the two control boards 15(1-2). It will be appreciated that in implementations where a back-up control board is not desired, the use of the hubs 320(1-n) is moot, as a hub would not be required to facilitate the transition from one system control board to another in case of a failure. Additionally, it should be noted that the hubs 320(1-n) may be situated in any desirable location on the system board set 29(1-n), including on the system board 30, the I/O board 35, or the expansion board 40 of the system board set 29(1-n).

In one embodiment, the system control board 15(1) communicates with one or more of the system board sets 29(1-n) using connections 330(1-n). Similarly, in one embodiment, the alternative system control board 15(2) communicates with one or more of the system board sets 29(1-n) using connections 340(1-n). In one embodiment, the connections 330(1-n) or 340(1-n) individually or collectively form a network, such as an Ethernet network, over which the active system control board 15(1-2) manages or controls the one or more domains formed from the one or more boards of the system board sets 29(1-n). In one embodiment, each connection 330(1-n) or 340(1-n) is a bi-directional, differential pair link that runs between the system control board 15(1-2) and the system board sets 29(1-n) through the switch 20.

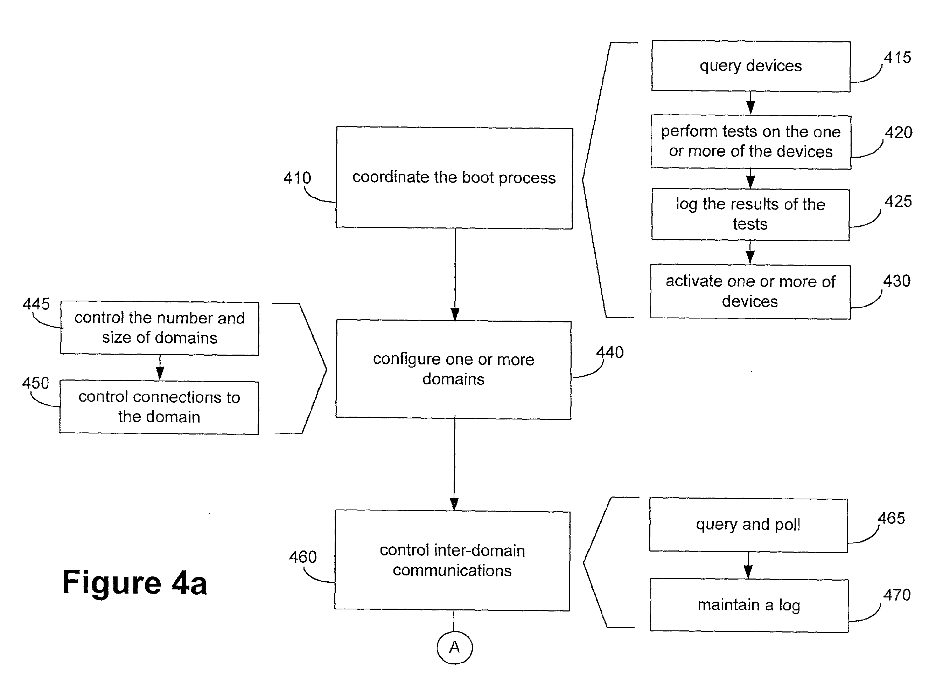

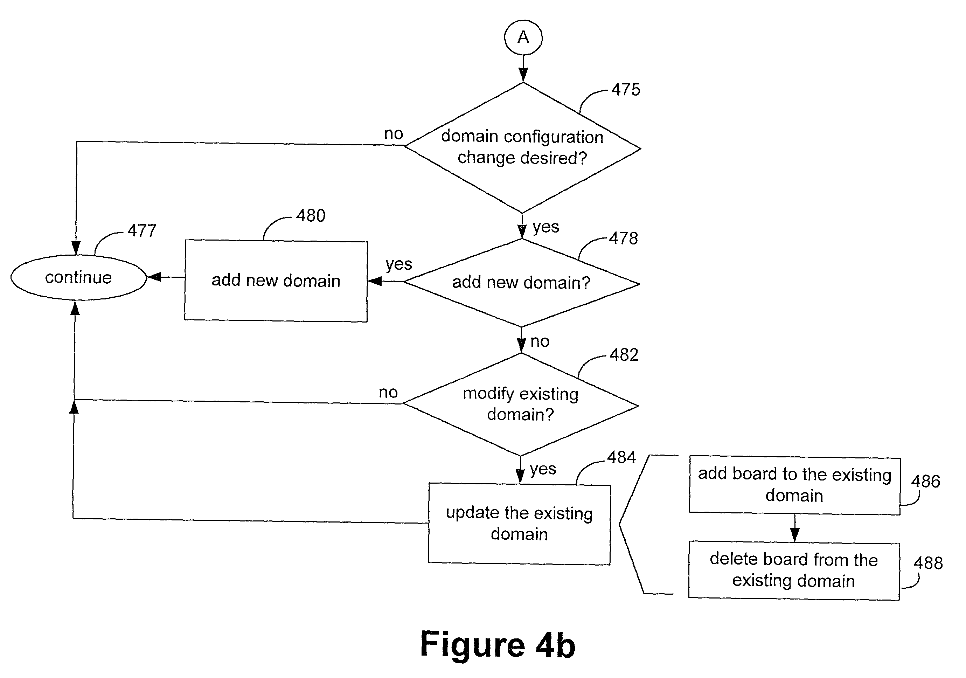

Referring now to Figure 4, one embodiment of a method that may be employed by the arrangement of Figure 3 to manage one or more of the defined domains is illustrated. The active system control board 15(1-2), in one embodiment, coordinates (at 410) the boot process for the system 10 over the connections 330(1-n) or 340(1-n) (see Figure 3). Coordinating the boot process entails, in one embodiment, querying (at 415) devices (e.g., one or more components in the system board sets 29(1-n)), performing (at 420) tests on the queried devices, logging (425) the results of the tests performed (at 420), and activating (430) the one or more tested devices.

The active system control board 15(1-2), in one embodiment, configures (at 440) one or more domains in the system 10 over one or more of the connections 330(1-n) or 340(1-n). In one embodiment, configuring one or more domains may include controlling the number of domains that are configured, as well as controlling the sizes of those domains. In one embodiment, for domains that contain more than one system board set 29(1-n), the active system control board 15(1-2) may designate a particular system board set 29(1-n) as the central connection point for the other boards 29(1-n) in that domain.

The active system control board 15(1-2), in one embodiment, controls (at 460) inter-domain communications. This may entail querying and polling (at 465) one or more of the domains to determine the operational status of the domains. In one embodiment, the active system control board 15(1-2) maintains (at 470) a log of information, such as the amount of data traffic, that may be useful in debugging, should one or more of the domains fail.

The active system control board 15(1-2), in one embodiment, determines (at 475) whether a change in the domain configuration is desired. A user may desire to change the domain configuration, for example, to add a new domain or to modify one or more of the existing domains. A change in the domain configuration may be desired when the user expressly requests to modify an existing domain configuration, or, alternatively, when the user simply adds or removes boards (*e.g*., system board 30, I/O board 35, expansion board 40) to and from the system 10. Since, in one embodiment, one or more boards may be hot-swapped from the system 10 while it is operating, the mere act of removing or adding a board may be an indication that a change in the domain configuration is desired by the user.

If no change in the domain configuration is desired (at 475), then the active system control board 15(1-2), in one embodiment, continues (at 477) with its normal operation. If, however, a change in the domain configuration is desired (at 475), then the active system control board 15(1-2), in one embodiment, determines (at 478) whether the user desires to add a new domain. If the user wishes (at 478) to add a new domain, then the active system control board 15(1-2) allows (at 480) the user to add the desired domain into the system 10. The active system control board 15(1-2) then continues (at 477) with normal operations.

If it is determined (at 478) that the user does not wish to add a new domain, then the active system control board 15(1-2), in one embodiment, determines (at 482) whether the user desires to modify (at 482) the existing domain configuration. If no modification is desired (at 482) by the user, then the active system control board 15(1-2) continues (at 477) with normal operations. If the user desires to modify (at 482) the existing domain configuration, then the active system control board 15(1-2) updates (at 484) the domain configuration accordingly. Updating (at 484) the existing domain configuration may include adding (at 486) or removing (at 488) boards (*e.g.*, system board 30 and I/O board 35, see Figure 1) to and from the existing domains.

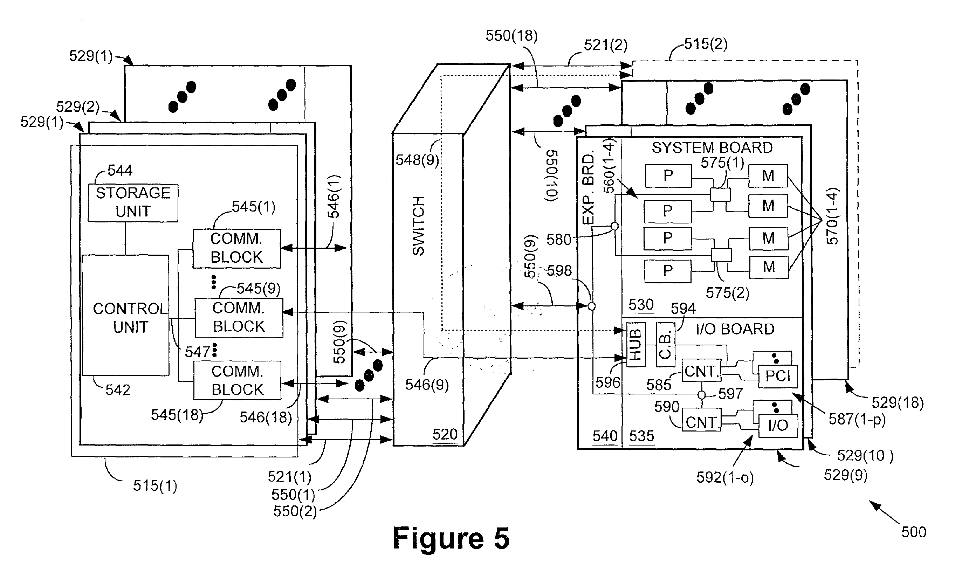

Referring now to Figure 5, a block diagram of an alternative embodiment of the system 10 of Figure 1 is illustrated. In particular, Figure 5 illustrates a system 500 that includes two system control boards 515(1-2) that are capable of interfacing with a plurality (eighteen in the illustrated embodiment) of system board sets 529(1-18) through a switch 520. In one embodiment, one system control board 515(1-2) serves as a back-up for the other board.

In the embodiment illustrated in Figure 5, the system 500 has a symmetrical configuration, where one half of the system board sets 529(1-18) are on one side of the switch 520, and the other half of the system board sets 529(1-18) are on the opposite side of the switch 520. Additionally, in the illustrated embodiment, the first system control board 515(1) and the second system control board 515(2) are diagonally positioned from each other relative to the switch 520. The symmetrical positioning of the boards 515(1-2), 529(1-18) in the illustrated manner may take advantage of the interface connections on both sides of the switch 520. It will be appreciated however that a variety of other configurations are possible.

The system board sets 529(1-18), in one embodiment, include one or more system boards 530, 535, and 540. In the illustrated embodiment, each system board set 29(1-n) is formed of three boards, a system board 35 (also referred to as "slot 0" board), an input/output (I/O) board 40 (also referred to as "slot 1" board), and an expansion board 45. The components of the three types of boards 530, 535, and 540 are described in more detail below. Again, it will be appreciated that other configurations of a board set are possible.

In one embodiment, the system 500 is dynamically subdivided into a plurality of system domains, where the active system control board 515(1-2) manages the domains using an internal Ethernet network, as described in more detail below. In the illustrated embodiment, the domains are managed by the active system control board 515(1-2) through the I/O board 535. In general, therefore it is useful for each domain to include at least one I/O board 535, although other embodiments may employ a different management structure.

In one embodiment, physical proximity is not needed for boards to belong in the same domain. Accordingly, it may be possible for a system board 530 and an I/O board 535 of a selected system board set 529(1-18) to belong to two separate domains. Thus domains may be formed from an entire system board set 29(1-n), and/or from selected system boards within one or more of the system board sets 29(1-n).

Note that for ease of illustration, only selected relevant elements of the first system control board 515(1) have been shown in Figure 5. Nevertheless, it will be appreciated that, in other embodiments, the first system control board 515(1) may include additional or fewer elements, depending on the particular implementation. In one embodiment the second system control board 515(2) has a similar configuration to the first system control board 515(1).

The system control board 515(1) includes a control unit 542 coupled to a storage unit 544 and one or more communications blocks 545(1-18). Each system control board 515(1-2) in the illustrated embodiment includes one communications block 545(1-18) for interfacing with the I/O board 535 of each system board set 529(1-18) over respective connections 546(1-18). Thus, if each system board set 529(1-18) is configured to be its own domain, the active system control board 515(1-2), in one embodiment, manages each domain through the I/O board 535 of each system board set 529(1-18). In one embodiment, where a domain contains more than one I/O board 535, the system control board 515(1) may designate one I/O board 535 as a central contact point through which communications with that domain occurs. Note that, as previously indicated, other implementations may adopt a somewhat different management structure.

In one embodiment, each of the communications blocks 545(1-18) is an application specific integrated circuit (ASIC) that provides a peripheral control interface (PCI) and an Ethernet interface, such as the RIO ASIC provided by Sun Microsystems, Inc. In this particular embodiment, the connection 547 between the control unit 542 and the communications blocks 545(1-18) is a PCI connection, while the connections 528 (1-18) between the communications blocks 545(1-18) and the respective I/O board 535 of the domains are Ethernet connections.

The system board 530 of each system board set 529(1-18) in the illustrated embodiment includes four processors 560(1-4), with each of the processors 560(1-4) having an associated memory 570(1-4). The processors 560(1-4), in one embodiment, are able to access their own respective memory 570(1-4), as well as access the memory associated with one or more of the other processors. (Note that a different number of processors and memories may be employed in any desirable combination, depending on the particular implementation). In one embodiment, two five-port dual data switches 575(1-2) connect the processor/memory pairs (processors 560(1-2)/memories 570(1-2) and processors 560(3-4)/memories 570(3-4)) to a board data switch 580.

The I/O board 535 of each system board set 529(1-18) in the illustrated embodiment includes a controller 585 for managing one or more of the PCI cards that may be installed in one or more PCI slots 587(1-p). In the illustrated embodiment, the I/O board 535 also includes a second controller 590 for managing one or more of the I/O cards that may be installed in one or more I/O slots 592(1-o). The I/O slots 592(1-o) may receive optics cards, network cards, and the like. The I/O board 535, in one embodiment, includes a communications block 594 coupled between an input terminal of a hub 596 and an input terminal of the controller 585. (It will be appreciated that the configuration of the I/O board 535 may vary from one implementation to another).

The two controllers 585, 590, in one embodiment, are coupled to a data switch 597. A switch 598 in the expansion board 540 receives the output signal from the switch 597 of the I/O board 535 and from the switch 580 of the system board set 529(9) and provides it to the switch 520 of the system 500. While lines 550(1-18) illustrate that the system board sets 529(1-18) may be coupled to the switch 520, it should be appreciated that the coupling may be accomplished in a variety of ways, including, but not limited to, using edge connectors, cables, or other available interfaces. In one embodiment, the system board sets 529(1-18) include two separate sets of switches, where one set of switches is for a data path and the other for an address path.

The switch 520, in one embodiment, includes three 18 x 18 crossbar switches that provide a separate data path, address path, and control signal path to allow inter-domain communications. Using separate paths for data, addresses, and control signals in this embodiment helps to reduce the interference among data traffic, address traffic, and control signal traffic. In one embodiment, the switch 520 provides a bandwidth of about 43 Gigabytes per second, although in other embodiments a higher or lower bandwidth may be provided by the switch 520.

As shown in Figure 5, in one embodiment, a first terminal of the hub 596 of the I/O board 535 of the system board set 529(9) is coupled to the first communications block 545(1) of the first system control board 515(1) by the connection 546(9) and the second terminal of the hub 596 is connected to a communications block (not shown) of the second system control board 515(2) over the connection 548(9). In one embodiment, the hubs 596 of the I/O boards 535 of the remaining system board sets 529(1-8,10-18) are connected in a similar manner to the respective communication blocks 545(1-8,10-18) of the system control boards 515(1-2). Individual connections 546(1-18), or the connections 546(1-18) as a whole, in the illustrated embodiment may be viewed as an Ethernet network that allows the system control boards 515(1-2) to manage or control one or more domains of the system 10. In one embodiment, the hub 596 allows the I/O board 535 of the system board sets 529(1-18) to communicate with the back-up system control board 515(2) in case the main system control board fails 515(1).

The communications block 594, in one embodiment, is an application specific integrated circuit (ASIC) that provides a peripheral control interface (PCI) and an Ethernet interface, such as the RIO ASIC provided by Sun Microsystems, Inc.. Accordingly, the communications block 545(1-18), in one embodiment, performs conversions between PCI and Ethernet signals. For example, the communications block 594 may receive a PCI-formatted signal, convert it to an Ethernet format, and then provide it to the hub 596, which then transmits the signal to the active system control board 15(1-2) over an Ethernet connection, such as the connection 546(9) or 548(9).

The various system layers, routines, or modules may be executable control units (such as control unit 310(1-2) and 542 (see Figures 3 and 5, respectively). Each control unit may include a microprocessor, a microcontroller, a digital signal processor, a processor card (including one or more microprocessors or controllers), or other control or computing devices.

The storage devices referred to herein may include one or more machine-readable storage media for storing data and instructions. The storage media may include different forms of memory including semiconductor memory devices such as dynamic or static random access memories (DRAMs or SRAMs), erasable and programmable read-only memories (EPROMs), electrically erasable and programmable read-only memories (EEPROMs), and flash memories; magnetic disks such as fixed, floppy, or removable disks; other magnetic media including tape; and optical media such as compact disks (CDs) or digital video disks (DVDs). Instructions that make up the various software layers, routines, or modules in the various systems may be stored in the respective storage devices. The instructions, when executed by the relevant control unit(s), cause the corresponding system(s), to perform the programmed acts.

In conclusion, it will be appreciated that the different embodiments described above are by way of illustration only, and not by way of limitation. Thus various modifications and adaptations of these embodiments will be apparent to the skilled person, and remain within the scope of the invention as specified by the following claims and their equivalents.

## Claims

1. An apparatus, comprising:
a storage unit; and
a first control unit communicatively coupled to the storage unit, wherein the first control unit manages one or more domains in a processor-based system over a network.

2. The apparatus of claim 1, wherein the network is an Ethernet network.

3. The apparatus of claim 1 or 2, wherein the one or more domains are each capable of executing an instance of an operating system.

4. The apparatus of any preceding claim, further comprising a second control unit for managing the one or more domains in response to determining that the first control unit is unable to manage the one or more domains.

5. The apparatus of any preceding claim, wherein the first control unit is operable to initialize the one or more domains.

6. The apparatus of any preceding claim, wherein the first control unit manages communications between the one or more domains.

7. The apparatus of any preceding claim, wherein the first control unit is operable to modify the domain configuration of the one or more domains.

8. A system, comprising:
at least one domain having a path for transmitting data and a network path for transmitting control signals; and
a control unit communicatively coupled to the at least one domain, wherein the control unit manages the at least one domain over the network path.

9. The system of claim 8, wherein the network path comprises an Ethernet network.

10. The system of claim 8 or 9, wherein the control unit controls a boot process of the at least one domain.

11. The system of any of claims 8 to 10, further including a second control unit for managing the at least one domain in response to detecting a malfunction with the first control unit.

12. The system of any of claims 8 to 11, wherein the control unit allows addition of another domain and wherein the control unit manages communications between the two domains.

13. The system of claim 12, wherein the control unit manages communication between the two domains over said network path.

14. A system, comprising:
a domain having a processor coupled to a memory; and
a first control unit and a second control unit communicatively coupled to the domain over an Ethernet connection, wherein the first control unit manages the domain during a first interval and wherein the second control unit manages the domain during a second interval.

15. The system of claim 14, wherein the first control unit is coupled to the domain by a switch and wherein the switch comprises at least a portion of the Ethernet connection.

16. The system of any of claim 14 or 15, wherein the first interval comprises an interval during which the first control unit is operational and the second interval comprises an interval during which the first control unit is not operational.

17. The system of any of claims 14 to 16, further comprising a second domain having a processor coupled to a memory, wherein the first control unit manages communications between the domain and the second domain.

18. The system of any of claims 14 to 17, wherein the domain further comprises a hub that allows the domain to receive signals from at least one of the first control unit and the second control unit.

19. The system of any of claims 14 to 18, wherein the first control unit reinitializes the domain in response to a request from a user.

20. The system of any of claims 14 to 19, wherein the first control unit coordinates a boot process of the system.

21. A method, comprising:
configuring at least a first board in a processor-based system as a first domain and a second board in the processor-based system as a second domain, wherein each of the first and second domains has a separate connection for data and control signals; and
transmitting one or more control signals over the control signal connection to at least one of the first domain and second domain.

22. The method of claim 21, further comprising adding a third board into the first domain.

23. The method of claim 22, further comprising identifying at least one of the first board and the third board as the primary board for communications.

24. The method of any of claims 21 to 23, further comprising controlling the number of boards that may be configured in the first domain.

25. The method of any of claims 21 to 24, wherein the control signal connection is an Ethernet connection, and wherein transmitting one or more control signals comprises initializing at least one of the first board and second board.

26. An article comprising one or more machine-readable storage media containing instructions that when executed enable a processor to:
configure a first domain in a processor-based system;
configure a second domain in the processor-based system; and
manage the first domain and the second domain in the processor-based system over a network.

27. The article of claim 26, wherein the instructions when executed enable the processor to associate one or more boards in the processor-based system with the first domain.

28. The article of claim 26, wherein the instructions when executed enable the processor to associate one or more boards in the processor-based system with the second domain.

29. The article of any of claims 26 to 28, wherein the instructions when executed enable the processor to activate at least one of the first domain and second domain.

30. The article of any of claims 26 to 29, wherein the instructions when executed enable the processor to manage communications between the first and second domains.

31. The article of any of claims 26 to 30, wherein the instructions when executed enable the processor to manage the first domain and the second domain over an Ethernet network.

32. A processor-based system, comprising:
a first system control board;
a second system control board;
a system board set comprising a hub capable of receiving signals from at least one of the first system control board and the second system control board; and
a switch coupled to the first system control board, the second system control board, and to the system board set, wherein the switch provides a network connection over which signals are transmitted.

33. A computer program for implementing the method of any of claims 21 to 25.
